# EUROPÄISCHE PATENTSCHRIFT

(11) **EP 4 423 388 B1**
(45) Veröffentlichungstag und Bekanntmachung des Hinweises auf die Patenterteilung: **04.03.2026**
(21) Anmeldenummer: 22862321.1
(22) Anmeldetag: 28.10.2022
(51) Int. Cl.: F03B 17/04, F03B 17/00, F03B 17/02, F03G 7/06

(54) **AUFTRIEBSKRAFTNUTZUNGSVORRICHTUNG**
BUOYANCY UTILISATION DEVICE
DISPOSITIF UTILISANT LA POUSSÉE D'ARCHIMÈDE

(30) Priorität: 31.10.2021 DE 102021128405; 08.11.2021 LU 500836
(43) Veröffentlichungstag der Anmeldung: 04.09.2024
(73) Patentinhaber: Ullrich, Thomas, 10179 Berlin (DE)
(72) Erfinder: Ullrich, Thomas, 10179 Berlin (DE)
(74) Vertreter: Gruner, Leopold Joachim
(86) Internationale Anmeldenummer: PCT/EP2022/080310
(87) Internationale Veröffentlichungsnummer: WO 2023/073223

(56) Entgegenhaltungen:
- WO-A1-2014/014425
- DE-U1- 9 404 819
- KR-A- 20020 030 848
- US-A- 4 325 216
- US-A- 5 125 233

## Beschreibung

### TECHNISCHES GEBIET

Die Erfindung betrifft eine Einrichtung zur Umwandlung von kinetischer Auftriebsenergie und/oder potentieller Energie in eine elektrische und/oder mechanische Energie.

### STAND DER TECHNIK

Aus dem Stand der Technik ist eine Vielzahl an Vorrichtungen bekannt, welche die Auftriebsenergie zumindest eines meist hohlen Auftriebskörpers nutzbar machen soll. Eine solche Vorrichtung ist auch als Auftriebskraftwerk bekannt.

So offenbart die DE8510493U1 eine Vorrichtung, bei der sich kugelförmige Auftriebskörper abwechselnd von einem mit Wasser gefüllten Behälter in einen mit Luft gefüllten Behälter bewegen. Dabei sind die kugelförmigen Auftriebskörper über eine Kette miteinander verbunden. Durch die Bewegung werden Räder angetrieben, welche mit einem Generator verbunden sind. Nachteilig hieran ist, dass unweigerlich Verluste auftreten, da die Dichtungselemente ein Entweichen des Wassers nicht verhindern können.

Ein ähnliches Prinzip ist in der DE2557746A1 offenbart. Hier sind Auftriebskörper an einem Förderband angeordnet, welches über Räder einen Generator antreibt. Damit die Auftriebskörper dem hydrostatischen Druck entgegen in den mit Wasser gefüllten Behälter eintreten können, umfasst die Vorrichtung ein Pumpensystem, welches Wasser aus einem Wassersammelbehälter mit erhöhtem Druck in eine Druckwasserkammer pumpt. Nachteilig hieran ist, dass das Pumpensystem Energie verbraucht, was den Wirkungsgrad der Vorrichtung minimiert.

Die DE102016010718A1**,** DE9300674U1**,** DE202010011168U1**,** DE102016009649A1, DE102009037452A1**,** DE4029150A1**,** DE0022693A1**,** DE2606160A1 beschreiben weitere, einander ähnliche, Vorrichtungen, die das gleiche Wirkprinzip verfolgen. Allen diesen Vorrichtungen ist gemein, dass die Auftriebskörper entweder über ein Element (Kette, Schnur, etc.) miteinander mechanisch gekoppelt sind. Dadurch ergibt sich, dass sich die Reibungs-/ Trägheitskräfte der auf verbindenden Element (Kette, Seil, Förderband, etc.) weiter hinten gelagerten Auftriebskörper auf weiter vorn gelagerte Auftriebskörper übertragen und so den Wirkungsgrad verringern.

Die WO2003058058A1 / DE202004009597U1 offenbart eine Vorrichtung zur Nutzung von Auftriebsenergie von Schwimmkörpern. Die Schwimmkörper sind an einer drehbar gelagerten Transporteinrichtung befestigt und umlaufen einen oberen und unteren Wendepunkt. Weiterhin umfasst die Vorrichtung eine Schleuseneinrichtung im unteren Bereich, welche zwei Becken mit unterschiedlichen Flüssigkeitspegeln miteinander verbindet. Die Schwimmkörper laufen entlang einer Kette, wobei nicht klar ist, wie die Kette durch die Schleuse geführt werden soll, so dass eine ausreichende Abdichtung gegeben ist. Zudem ist für die Betätigung der Schleusen Energie notwendig, was den Wirkungsgrad der Anlage senkt.

Die DE102017007471A1 offenbart eine Einrichtung zur Energieerzeugung unter Nutzung der Auftriebskraft in einem flüssigkeitsgefüllten Behälter, wobei die Auftriebskörper untereinander mit einer Kette verbunden sind und durch zwei Schleusen geführt werden. Auch hier ist unklar, wie die Ketten durch die Schleusen geführt werden sollen, wobei die Betätigung der Schleusen den Wirkungsgrad der Einrichtung senkt.

Die US20150267677A1 beschreibt eine Apparatur zur permanenten Energieerzeugung, wobei der Auftrieb und die Gravitation ausgenutzt werden. Diese Vorrichtung nutzt gasgefüllte Auftriebskörper, die miteinander verbunden sind. Die gasgefüllten Auftriebskörper dringen von unten durch eine Schleuse in einen flüssigkeitsgefüllten Raum ein und erfahren hierin einen Auftrieb. Auch hier sind die gasgefüllten Auftriebskörper miteinander verbunden, wodurch zusätzliche Reibungsverluste auftreten, die den Wirkungsgrad der Apparatur senken.

Die DE9404819U1 offenbart einen Gravitations-Motor, welcher den Auftrieb und die Gravitation zur Bereitstellung von Energie nutzt. Ein Kraftkolben zirkuliert innerhalb eines Röhrensystems im Kreis und passiert dabei zwei Schleusen, welche verhindert sollen, dass sich die Medien (Luft, Wasser) vermischen können. In einem Ausführungsbeispiel bewegt sich der Kraftkolben entlang von Führungsschienen, welche jedoch im Schleusenbereich unterbrochen sind. Zusätzlich zu der Betätigung der Schleusen muss zudem noch Energie aufgewendet werden, um schwenkbare Führungsteile zu bewegen, damit die Führungsschienen im Schleusenbereich geschlossen sind. Nachteilig ist zudem, dass durch weitere mechanische Bauteile, wie der schwenkbaren Führungsteile, die mechanische Anfälligkeit der Vorrichtung erhöht wird.

Die DE102014000866A1 offenbart eine gesteuerte Auftriebsanlage zur Energieerzeugung, bei der im Volumen veränderbare, gasdichte Hohlkörper (Ballons) von einem endlosen Zugmittel stetig durch einen Flüssigkeitsbehälter geführt werden. Die Ballons sind über einen Schlauch fluidverbunden, so dass der gasförmige Inhalt des Ballons in die ihm nachfolgenden Ballons gedrückt wird, wenn ein Bereich passiert wird, der den vorausgehenden Ballon zusammendrückt. Auch hier ist nachteilig, dass die Auftriebskörper miteinander verbunden sind. Weiterhin müssen die Auftriebskörper mechanisch zusammengedrückt werden, was den Wirkungsgrad extrem verringert.

Es sind auch Vorrichtungen bekannt, bei dem die Auftriebskörper nicht miteinander mechanisch gekoppelt sind. So offenbaren die DE102010015667A1**,** DE102013009842A1**,** DE102011003099A1**,** DE102010051596A1 Vorrichtungen, bei denen die Auftriebskörper innerhalb eines Rohr- oder Kammersystems geführt werden. Nachteilig hierbei ist jedoch, dass die Auftriebskörper aufgrund fehlender mechanischer Kopplung einzeln durch ein Schleusensystem geführt werden müssen, was wiederum den Wirkungsgrad schmälert.

Die DE102006007738A1 offenbart ein Verfahren zur Umwandlung von Bewegungsenergie von Materien (Auftriebskörpern) in eine Rotationsenergie zum Antrieb von Generatoren. Nicht miteinander verbundene Auftriebskörper werden auch hier durch ein Schleusensystem geführt, welches entsprechend angesteuert werden muss, was den Wirkungsgrad senkt.

KR1020020030848A offenbart eine Vorrichtung zur Erzeugung von Energie mittels Auftriebs und der Schwerkraft. Nicht miteinander verbundene Auftriebskörper werden abwechselnd durch Fluide mit unterschiedlichen Dichten geführt. Dabei soll das dichtere und damit schwerere Fluid aufgrund seiner Schwerkraft gegen das leichtere Fluid drücken, um zu ermöglichen, dass dieses einen höheren Flüssigkeitspegel hat als das schwerere Fluid. Die durch die Gravitation nach unten sinkenden Auftriebskörper drücken die vorderen Auftriebskörper in das schwerere Fluid und gelangen dann in das leichtere Fluid, wo sie aufgrund des Auftriebs nach oben treiben. Nachteilig ist, dass es aufgrund der Bewegung der Auftriebskörper zwangsläufig zu einer Durchmischung der Fluide kommen muss, was den Wirkungsgrad verringert.

Die WO 2014/014425 A1 beschreibt eine Vorrichtung zur Umwandlung von Wärmenergie in elektrische Energie, wobei die Vorrichtung einen Flüssigkeitsspeicher aufweist, der in zwei Teile abgetrennt ist: einen ersten Teil, der eine Flüssigkeit mit hoher Temperatur enthält, und einen zweiten Teil, der eine Flüssigkeit mit niedriger Temperatur enthält. Auftriebskörper, welche abhängig von der Temperatur des ersten und zweiten Teils eine Änderung des Volumens und damit einen unterschiedlichen Auftrieb erfahren, treiben eine Struktur an, die mit einem Generator zur Stromerzeugung verbunden ist. Nachteilig ist, dass die Auftriebskörper, dadurch dass sie nicht miteinander verbunden sind, eine zufällige Bewegung durch den ersten und zweiten Teil ausführen.

Die US 5 125 233 A beschreibt ein Energieumwandlungsgerät, welches die Umwandlung von Wärme in mechanische Energie bewirkt. Mittels Heiz- und Kühlleitungen wird eine Flüssigkeit in einer ersten und einer zweiten Leitung erwärmt bzw. abgekühlt. Eine Vielzahl von Ballons, die über ein Endlosband miteinander verbunden sind, wird abwechselnd durch die erste und zweite Leitung geführt. In der beheizten Leitung verdampft das Fluid im inneren des Ballons, wodurch dieser einen erhöhten Auftrieb erfährt. Innerhalb der zweiten Leitung sowie in einem Kühlbad kondensiert das Gas wieder in das Fluid und der Vorgang beginnt von vorn. Nachteilig ist jedoch, dass in der Heizleitung sowie in der Kühlleitung die Wärmeübertragung über ein gasförmiges Medium (Luft) erfolgt, welche ein schlechterer Wärmeleiter als eine Flüssigkeit wie bspw. Wasser ist.

Aus dem Stand der Technik sind weiterhin Schriften bekannt, welche die Ausnutzung einer Kapillaraszension für die Gewinnung von elektrischer Energie vorschlagen. So beschreiben beispielsweise die AT520053A1 und die JPS5813172A jeweils ein System hintereinandergeschalteter Becken und Kapillarröhrenelemente, wobei eine Flüssigkeit von einem niedrigen Becken in ein höher gelegenes Becken mit Hilfe der Kapillaraszension befördert werden soll. Jedoch ist beiden Systemen nachteilig, dass der Kapillarfluss im oberen Becken unterbrochen wird und somit abreißt.

Die DE10257375A1 beschreibt ein System, welches ebenfalls Kapillarkräfte ausnutzt, wobei jedoch das die Kapillaren umfassende Element beheizt wird, um das in den Kapillaren enthaltene Wasser zu verdampfen. Weiterhin wird das Wasser bereits vor dem Eintritt in die Kapillaren erwärmt. Dem System ist nachteilig, dass es innerhalb der Kapillaren zu einer Gasbildung kommt, was wiederrum den Kapillarfluss abreißen lässt. Es ist zudem nicht beschrieben, wie die zum Erwärmen und Verdampfen benötigte Energie bereitgestellt wird.

### AUFGABE

Es ist daher Aufgabe der vorliegenden Erfindung eine Auftriebskraftnutzungsvorrichtung für die Nutzung von Auftriebsenergie bereitzustellen, welche auf eine mechanische Kopplung der Auftriebskörper und zugleich auf ein Schleusensystem mit beweglichen mechanischen Elementen (z.B. Klappen, Türen) verzichtet. Die Vorrichtung soll einen höheren Wirkungsgrad aufweisen als die aus dem Stand der Technik bekannten Auftriebskraftwerke. Weiterhin ist es Aufgabe der vorliegenden Erfindung, Auftriebskörper entlang einer gewünschten Bewegungsbahn sicher und stabil zu führen.

### LÖSUNG

Die Aufgabe wird durch die Auftriebskraftnutzungsvorrichtung gemäß Anspruch 1 gelöst. Weitere vorteilhafte Ausgestaltungen sind den Unteransprüchen, der Beschreibung und den Ausführungsbeispielen zu entnehmen.

### ALLGEMEINE VORTEILE

Da die erfindungsgemäßen Auftriebskörper nicht mechanisch miteinander gekoppelt sind, können auftretende Reibungs-/ Trägheitskräfte nachgeschalteter verbindender Elemente sowie nachgeschalteter Auftriebskörper nicht auf vorgeschaltete verbindende Elemente und Auftriebskörper übertragen werden, wodurch der Wirkungsgrad erhöht wird.

Weiterhin sind aufgrund des erfindungsgemäßen Schleusensystems keine verbindenden Elemente notwendig. Dadurch sind insgesamt weniger Bauteile nötig, was mit einer Gewichtsersparnis und geringerem Verschleiß einhergeht.

Die dem ersten Medium und/oder zweiten Medium zugewandte Oberfläche des Auftriebskörpers weist eine Profilierung auf, wodurch die Bewegung der Auftriebskörper sicher und stabil erfolgen und eine Drehbewegung des Auftriebskörpers um seine Langsachse verhindert werden kann.

Weitere Vorteile sind der Beschreibung und den Ausführungsbeispielen zu entnehmen.

### BESCHREIBUNG DER ERFINDUNG

Die Erfindung umfasst eine Auftriebskraftnutzungsvorrichtung, mit welcher kinetische Auftriebsenergie sowie potentielle Energie nutzbar gemacht werden soll.

Allgemein wird unter Energie die Fähigkeit verstanden, Arbeit zu verrichten, Wärme abzugeben oder Licht auszustrahlen. Energie ist nötig, wenn etwas in Bewegung gesetzt, beschleunigt, hochgehoben, erwärmt oder beleuchtet werden soll. Die mechanische Arbeit (W) ist das Produkt aus Kraft (F) und der zurückgelegten Strecke (s) des Arbeit verrichtenden Körpers.

Erfindungsgemäß wird unter einer kinetischen Auftriebsenergie also die Fähigkeit verstanden, mittels der statischen Auftriebskraft eines Körpers eine mechanische Arbeit zu verrichten. Der statische Auftrieb ist eine der Schwerkraft entgegengesetzte Kraft auf einen Körper in Flüssigkeiten oder Gasen. Der statische Auftrieb wird durch die Verdrängung des umgebenden Mediums hervorgerufen. Ursächlich für die Auftriebskraft ist, dass der hydrostatische Druck von der Höhe des betrachteten Orts abhängt. Auf die Unterseite des Körpers wirkt ein höherer Druck als auf dessen Oberseite. Der statische Auftrieb entspricht der Gewichtskraft der entsprechenden Verformung des Fluids. Dieser Zusammenhang ist als archimedisches Prinzip bekannt. Auf einen Körper, der in ein Fluid mit einer Dichte (p) getaucht ist, wirkt also eine Auftriebskraft (F_{A}). Diese errechnet sich als Produkt aus dem vom Körper verdrängten Volumen (V) des Fluids, dessen Dichte (p) sowie der Erdbeschleunigung (g). Die Gewichtskraft (F_{G}) des verdrängten Fluids sowie die Auftriebskraft (F_{A}) lässt sich also mit F_{A/G} = g * p * V errechnen. Aus dieser Formel geht hervor, dass die Auftriebskraft umso höher ist, je dichter das Fluid und je größer das vom Körper verdrängte Volumen ist. Jedoch ist die Gewichtskraft des Körpers der Auftriebskraft entgegengerichtet, so dass für einen möglichst großen Auftrieb ein im Wesentlichen hohler Körper bevorzugt wird, so dass der Körper eine geringere mittlere Dichte als das Fluid aufweist.

Potentielle Energie oder Lageenergie ermöglicht die Verrichtung von Arbeit in Richtung der Erdbeschleunigung. Im Schwerefeld der Erde ist die potentielle Energie die Energie, welche ein Körper durch seine Höhenlage hat. Wenn ein Körper aus einer Höhe von 20 Metern herabfällt, kann er doppelt so viel Arbeit verrichten als wenn er aus einer Höhe von 10 Metern fällt. Während des Falls wird die potentielle Energie in kinetische Energie oder andere Energieformen umgewandelt und verringert sich. In Wasserkraftwerken kann die potentielle Energie des Wassers eines Stausees in elektrische Energie umgewandelt werden.

Erfindungsgemäß kann die potentielle Energie und/oder die kinetische Auftriebsenergie eines Körpers in eine elektrische Energie und/oder in eine mechanische Energie umgewandelt werden. So kann beispielsweise der Auftrieb oder das Herabfallen des Auftriebskörpers genutzt werden, um über eine mechanische Kopplung einen weiteren Körper beispielsweise in eine Bewegung zu versetzen. Demzufolge umfasst die erfindungsgemäße Vorrichtung einen Umwandler, der dazu eingerichtet ist die kinetische Auftriebsenergie in eine mechanische und/oder elektrische Energie umzuwandeln. Der Umwandler kann als Generator ausgestaltet sein, um elektrische Energie bereitzustellen. Dem Fachmann sind unterschiedliche Ausführungsformen der Kopplung mechanischer Elemente mit Generatoren bekannt.

Erfindungsgemäß umfasst ein Körper zumindest einen Auftriebskörper, welcher in einem Fluid bewegbar ist. Ein Fluid kann eine Flüssigkeit (z.B. Wasser, Öl) oder auch ein Gas (z.B. Luft, Wasserstoff, Helium) umfassen.

Unter einem Raum ist hierin ein Bereich zu verstehen, welcher ein weiter unten definiertes Medium umfasst. Bei einem Raum kann es sich um einen abgegrenzten Bereich handeln (z.B. einen Behälter). Ein Raum kann weiter ein nicht abgegrenzter Bereich sein (z.B. ein marines oder limnisches System wie etwa ein Meer oder ein See).

Die erfindungsgemäße Vorrichtung umfasst zumindest einen ersten Raum, welcher mit einem ersten Medium gefüllt ist, wobei das erste Medium ein Fluid umfasst, und zumindest einen zweiten Raum, welcher mit einem zweiten Medium gefüllt ist, wobei das zweite Medium ein Fluid umfasst. In einer bevorzugten Ausgestaltung der Erfindung weist das erste Medium eine größere mittlere Dichte auf als das zweite Medium und das zweite Medium weist eine geringere mittlere Dichte auf als der Auftriebskörper.

Gemäß einer Ausführungsform der Auftriebskraftnutzungsvorrichtung dient die Auftriebskraftnutzungsvorrichtung der Nutzung und Umwandlung kinetischer Auftriebsenergie sowie potentieller Energie in mechanische und/oder elektrische Energie, wobei die Vorrichtung als Komponenten einen ersten Raum, der mit einem ersten Medium gefüllt ist, einen zweiten Raum, der mit einem zweiten Medium gefüllt ist, zumindest einen Auftriebskörper und eine umlaufende Führung umfasst, wobei eine Bewegung zumindest eines Auftriebskörpers entlang der umlaufenden Führung erfolgt, wobei die mittlere Dichte des ersten Mediums größer ist als des zweiten Mediums, wobei die umlaufende Führung durch den ersten Raum und den zweiten Raum verläuft, wobei die umlaufende Führung ein Endlosschienensystem umfasst, wobei der erste Raum und der zweite Raum an zumindest einer Stelle durch ein Schleusensystem voneinander getrennt sind, wobei das Schleusensystem eine permanente Öffnung aufweist, wobei die Öffnung des Schleusensystems passgenau zum kleinsten lateralen Querschnitt des Auftriebskörpers ausgebildet ist.

Insbesondere betrifft die Erfindung eine Auftriebskraftnutzungsvorrichtung zur Nutzung und Umwandlung von kinetischer Auftriebsenergie und/oder potentieller Energie in mechanische und/oder elektrische Energie, wobei die Vorrichtung als Komponenten einen ersten Raum, der mit einem ersten Medium gefüllt ist, einen zweiten Raum, der mit einem zweiten Medium gefüllt ist, zumindest einen Auftriebskörper, eine umlaufende Führung, wobei eine Bewegung zumindest eines Auftriebskörpers entlang der umlaufenden Führung erfolgt, umfasst, wobei die umlaufende Führung durch den ersten Raum und den zweiten Raum verläuft, wobei die umlaufende Führung bevorzugt Endlosschienensystem umfasst, wobei der erste Raum und der zweite Raum an zumindest einer Stelle durch ein Schleusensystem voneinander getrennt sind, wobei das Schleusensystem eine permanente Öffnung aufweist, wobei der Auftriebskörper derart ausgestaltet ist, dass seine mittlere Dichte und sein Auftrieb wie hierin beschrieben abhängig von einer Temperatur ist, wobei sich die Temperatur des ersten Mediums und des zweiten Mediums unterscheidet, wobei die Vorrichtung derart eingerichtet ist, dass eine externe Energiequelle die Temperaturänderung im ersten und/oder zweiten Raum induziert, wobei das erste Medium im ersten Raum und das zweite Medium im zweiten Raum angeordnet ist.

In einer Ausgestaltung unterscheidet sich die Temperatur des ersten Mediums vom zweiten Medium zumindest um 5 K, bevorzugt zumindest um 10 K, besonders bevorzugt zumindest um 15 K, ganz besonders bevorzugt zumindest um 20 K, weiter bevorzugt zumindest um 25 K und weiter besonders bevorzugt um 30 K.

Eine Temperaturänderung kann durch die Zufuhr oder das Ableiten von Wärme aus dem ersten und/oder zweiten Raum erreicht werden. Bevorzugt wird die Temperaturänderung durch eine externe Energiequelle induziert. Bei einer externen Energiequelle kann es sich um eine Vorrichtung handeln, welche Wärmeenergie abführt (z.B. Verbrennungsanlage, Sonnenkollektor). Ebenso kann ein geothermischer Prozess von einer Energiequelle umfasst sein.

Insbesondere kann die mittlere Dichte des ersten Mediums auch kleiner sein als die mittlere Dichte des zweiten Mediums, wobei die Dichte von einer durch einen weiter unten beschriebenen Wärmetauscher induziert wird. So verringert sich die Dichte des ersten Mediums gegenüber dem zweiten Medium, wenn die Medien wie unten angegeben die gleiche chemische Struktur aufweisen und der Wärmetauscher eine Temperaturänderung im ersten Medium aber nicht im zweiten Medium bewirkt. Insbesondere bewirkt die Temperaturänderung im ersten und/oder zweiten Raum aufgrund der Ausgestaltung des Auftriebskörpers eine Veränderung der Dichte und des Auftriebs des Auftriebskörpers, abhängig davon, in welchem Raum sich der Auftriebskörper befindet. Dabei hängt die mittlere Dichte und der Auftrieb des Auftriebskörpers davon ab, durch welchen Raum sich der Auftriebskörper bewegt. Dies ist weiter unten ausführlicher beschrieben.

Gemäß einer besonders bevorzugten Ausführungsform verringert oder erhöht sich die mittlere Dichte des Auftriebskörpers bei Erhöhung der Temperatur. Bevorzugt verringert sich die mittlere Dichte des Auftriebskörpers wie hierin beschrieben.

In einer besonders bevorzugten Ausgestaltung umfassen beide Räume eine umlaufende Führung. Unter dieser wird eine Begrenzung verstanden, welche die Bewegung des Auftriebskörpers in zwei von drei Dimensionen einschränkt. Besonders bevorzugt ist die Bewegung des Auftriebskörpers als auch dessen laterale Ausdehnung entlang des Endlosschienensystems durch ein Endlosschienensystem begrenzt.

Im Wesentlichen ist der Auftriebskörper durch Auftrieb vom Erdmittelpunkt weg und durch Fallen zum Erdmittelpunkt hin bewegbar. Um einen Wechsel der nach oben gerichteten Bewegung in eine nach unten, also zum Erdmittelpunkt gerichtete Bewegung und auch andersherum zu erlauben, sind zumindest zwei Umkehrpunkte notwendig, wobei die Erfindung einen oberen Umkehrpunkt und einen unteren Umkehrpunkt umfasst. Erfindungsgemäß folgt ein Wechsel von einer nach oben gerichteten Bewegung des Auftriebskörpers in eine nach unten gerichtete Bewegung des Auftriebskörpers am oberen Umkehrpunkt. Der Wechsel von einer nach unten gerichteten Bewegung in eine nach oben gerichtete Bewegung des Auftriebskörpers erfolgt am unteren Umkehrpunkt.

Gemäß einer Ausführungsform umfasst das Endlosschienensystem einen unteren Umkehrpunkt und einen oberen Umkehrpunkt. Insbesondere ist zumindest einer der Umkehrpunkte, bevorzugt der obere Umkehrpunkt, ist so ausgestaltet, dass das Endlosschienensystem an dieser Stelle unterbrochen oder geöffnet werden kann. So kann vorteilhaft erreicht werden, dass die Auftriebskörper aus dem Endlosschienensystem entnommen oder eingeführt werden können.

Die Ausrichtung der Vorrichtung kann innerhalb eines kartesischen Koordinatensystems beschrieben werden. Die negative z-Achse zeigt dabei zum Erdmittelpunkt, die positive z-Achse von diesem weg. Die Bezeichnungen "unten" oder "unterhalb" und "oben" oder "oberhalb" beziehen sich auf die räumliche Lage eines Objektes innerhalb des kartesischen Koordinatensystems, wobei eine untere Position sich näher am Erdmittelpunkt befindet als eine obere Position.

Die umlaufende Führung verläuft durch den ersten und zweiten Raum und umfasst ein Endlosschienensystem, welches derart ausgestaltet ist, dass zumindest ein Auftriebskörper darin führbar ist. Das Endlosschienensystem kann derart ausgestaltet sein, dass sich zumindest zwei parallel zueinander ausgerichtete Führungsschienen parallel zur z-Achse durch den ersten und den zweiten Raum erstrecken. Am Übergang von ersten zum zweiten Raum, sowie vom zweiten zum ersten Raum ist eine Krümmung der Führungsschienen erforderlich, weshalb die Führungsschienen in diesem Bereich nicht parallel zur z-Achse verlaufen. Die Krümmung der Führungsschienen muss dabei derart gestaltet sein, dass ein Auftriebskörper möglichst reibungsarm darin geführt werden kann. Vorteilhaft ergibt sich aus der Verwendung eines Endlosschienensystems, dass ein Auftriebskörper kontinuierlich durch dieses bewegbar ist. Zudem ist das Endlosschienensystem verschleißfrei, da keine beweglichen Teile involviert sind.

Insbesondere ist das Endlosschienensystem so ausgestaltet, dass die Bewegung des Auftriebskörpers entlang des Endlosschienensystems in seiner lateralen Ausdehnung begrenzt ist. Somit kann vorteilhaft erreicht werden, dass sich der Auftriebskörper auf einer definierten Strecke durch den ersten und zweiten Raum bewegt. Das Endlosschienensystem kann so ausgestaltet sein, dass sich der Auftriebskörper nicht auf geradem Weg durch den ersten und/oder zweiten Raum bewegt, sondern bspw. in einem wellenartigen Muster. So kann vorteilhaft die Verweildauer des Auftriebskörpers im ersten und/oder zweiten Raum erhöht werden, um die Zeit einer Wärmeaufnahme und/oder Wärmeabgabe des Auftriebskörpers von oder an das erste und/oder zweite Medium zu verlängern.

Um eine möglichst reibungsarme Bewegung eines Auftriebskörpers innerhalb des Endlosschienensystems zu ermöglichen, kann dieser reibungsverringernde Elemente umfassen. So kann ein reibungsverringerndes Element beispielsweise aus einem reibungsarmen Kunststoff wie bspw. Polytetrafluorethylen (PTFE) bestehen. Das reibungsverringernde Element kontaktiert die Führungsschiene und erlaubt vorteilhaft ein reibungsarmes Gleiten des Auftriebskörpers durch das Endlosschienensystem. Weiterhin kann das Endlosschienensystem auch Räder- oder Walzenelemente umfassen, welche den Hohlkörper zu dem Endlosschienensystem beabstanden sowie die Reibung verringern.

Der erste und der zweite Raum können durch zumindest einen weiteren dritten Raum (auch: Übergangsbereich) voneinander abgetrennt sein, wobei der dritte Raum ein Schleusensystem umfasst. Bevorzugt ist das Schleusensystem am unteren Umkehrpunkt angeordnet. In einer Ausgestaltung der Erfindung ist die Öffnung des Schleusensystems passgenau zum kleinsten lateralen Querschnitt des Auftriebskörpers ausgebildet.

Gemäß einer bevorzugten Ausführungsform ist das Schleusensystem am unteren Umkehrpunkt zwischen dem ersten Raum und dem zweiten Raum angeordnet. Es kann auch vorgesehen sein, dass das Schleusensystem am oberen Umkehrpunkt oder am oberen und unteren Umkehrpunkt angeordnet ist. Damit kann vorteilhaft erreicht werden, dass die weiter unten beschriebene Temperatursperre am oberen und unteren Umkehrpunkt ausgebildet ist und somit einem Temperaturausgleich des Mediums des ersten und zweiten Raumes vorgebeugt wird, was die Effizienz der Vorrichtung verbessert.

Gemäß einer bevorzugten Ausgestaltung bewegt sich der Auftriebskörper abwechselnd vom ersten Raum zum zweiten Raum und bewegt sich zumindest in einem Übergangsbereich zwischen dem ersten Raum und dem zweiten Raum durch das Schleusensystem und insbesondere durch ein vom Schleusensystem umfasste Öffnung wie hierin beschrieben.

Gemäß einer Ausführungsform ist das Schleusensystem so gestaltet, dass der Auftriebskörper kontinuierlich durch dieses bewegbar ist. Die kontinuierliche Bewegung erlaubt vorteilhaft eine nicht unterbrochene Bewegung des Auftriebskörpers durch das Schleusensystem ohne die Verwendung von beweglichen Teilen wie bspw. Schleusentüren.

In einer weiteren Ausgestaltung der Erfindung umfasst das Schleusensystem zumindest ein Dichtungselement, welches beispielsweise als Lippendichtung ausgestaltet sein kann. Erfindungsgemäß ist das Dichtungselement passgenau zum kleinsten lateralen Querschnitt des Auftriebskörpers ausgebildet, so dass dieser passgenau durch diesen hindurchführbar ist. Bei einer zylinderförmigen Ausgestaltung des Auftriebskörpers ergibt sich der kleinste laterale Querschnitt senkrecht zur Mantelfläche des Zylinders. Bei einer kugelförmigen Ausgestaltung des Auftriebskörpers entspricht der kleinste laterale Querschnitt dem größten Durchmesser (bzw. dem Großkreis) der kugelförmigen Ausgestaltung.

Dabei ist unter passgenau zu verstehen, dass sich der Auftriebskörper ungehindert durch die Schleuse bewegen kann und es vorteilhaft zu keinem Verkanten des Auftriebskörpers innerhalb der Schleuse kommt.

Es können auch mehrere Dichtungselemente hintereinandergeschaltet sein. Der Fachmann wird die Anzahl der Dichtungselemente, deren Abmessungen und deren Material so wählen, dass eine reibungsarme Bewegung der Auftriebskörper durch diese hindurch ermöglicht ist.

Erfindungsgemäß wird das Endlosschienensystem im physikalischen Sinn durch zumindest ein Dichtungselement unterbrochen. Da jedoch auch zwischen den Dichtungselementen Führungsschienen angeordnet sind und eine kontinuierliche Bewegung des Auftriebskörpers durch diese hinweg erfolgt, soll das Endlosschienensystem weiterhin als solches bezeichnet werden, obwohl die Bezeichnung "diskontinuierliches Schienensystem" eine passendere wäre.

Im Gegensatz zu im Stand der Technik beschriebenen Systemen weist das Schleusensystem eine permanente Öffnung auf, was bedeutet, dass der erste und der zweite Raum nicht durch ein Schleusensystem mit Toren oder Klappen abgetrennt ist. Eine permanente Öffnung und der Verzicht auf ein Schleusensystem mit beweglichen mechanischen Teilen erlaubt vorteilhaft einen verschleißarmen Betrieb der erfindungsgemäßen Vorrichtung. Zudem muss keine Energie aufgewendet werden, um die Schleuse zu öffnen oder zu schließen.

Damit der Auftriebskörper innerhalb eines Fluids aufsteigen kann muss dessen mittlere spezifische Dichte geringer sein als die des den Auftriebskörper umgebenden Fluids. Der Auftriebskörper ist bevorzugt als ein Hohlkörper ausgebildet, wobei das Material des Hohlkörpers ein Metall (z.B. Aluminium, Edelstahl), einen vorzugsweise thermoplastischen Kunststoff wie Polyethylen (PE), Polypropylen (PP), Polyvinylchlorid (PVC), Polyvinylidenfluorid (PVDF), Polytetrafluorethylen (PTFE), ein Glas, ein organisches Material (z.B. Holz), oder einen halbsynthetischen Kunststoff umfasst. Weiterhin kann das Material des Hohlkörpers auch Glasfaserverstärkte Kunststoffe (GFK) umfassen.

Bevorzugt ist der Auftriebskörper so ausgestaltet, dass er Wärmeenergie leicht aufnehmen und wieder abgeben kann.

In einer Ausführungsform ist die mittlere Dichte des Auftriebskörpers und somit dessen Auftrieb abhängig von einer Temperaturänderung. Dafür umfasst der Auftriebskörper ein temperaturveränderliches Medium und/oder ein technisches Element, dessen räumliche Ausdehnung von einer Temperaturänderung abhängig ist. Durch die Veränderlichkeit der räumlichen Ausdehnung kann das Volumen, die mittlere Dichte und damit der Auftrieb des Auftriebskörpers beeinflusst werden. Erfindungsgemäß wird unter einer Temperaturänderung eine Verringerung der Temperatur sowie bevorzugt eine Erhöhung der Temperatur verstanden.

Der Innenraum des Hohlkörpers kann als ein temperaturveränderliches Medium ein Gas und/oder ein Polymer umfassen, dessen Ausdehnung die mittlere Dichte des Hohlkörpers beeinflusst. So kann ein Gas verwendet werden, welches abhängig von der Temperatur des Fluids seine Ausdehnung verändert. Der Hohlkörper kann dabei zumindest teilweise flexibel ausgestaltet sein, so dass die Ausdehnung des Gases eine Vergrößerung des Volumens des Auftriebskörpers und damit einen erhöhten Auftrieb bewirkt.

Insbesondere ist die mittlere Dichte des Auftriebskörpers durch die Ausdehnung des Gases und/oder des Polymers beeinflussbar, wobei die Ausdehnung des Gases und/oder des Polymers abhängig von einer Temperaturänderung im ersten und/oder zweiten Raum ist. Durch die Temperaturänderung wird das vom ersten oder zweiten Raum umfasste Medium kälter oder bevorzugt wärmer. Der Auftriebskörper kann also im wärmeren Raum Wärme aufnehmen und diese im kälteren Raum wieder abgeben. Dabei kann ein verringertes Volumen des Auftriebsbehälters den Auftrieb reduzieren und ein vergrößertes Volumen den Auftrieb erhöhen. Es soll hierbei verstanden werden, dass der Raum, der das wärmere der Medien enthält, auch als der warme Raum bezeichnet werden kann.

Nach einer vorteilhaften Ausführung bewegt sich der Auftriebskörper im wärmeren Raum nach unten, da sein Volumen bei Wärme abnimmt. Somit wird der Auftrieb sowohl durch das wärmere, den Auftriebskörper umgebende Medium, als auch durch das geringere Volumen des Auftriebskörpers reduziert. Dadurch ist die nach unten gerichtete Gewichtskraft größer als die Auftriebskraft. Vorteilhaft wird dadurch die nach unten gerichtete Bewegung des Auftriebskörpers unterstützt. Das größere Volumen des Auftriebskörpers im kälteren Raum unterstützt die nach oben gerichtete Bewegung vice versa.

Eine bevorzugte Ausgestaltung sieht vor, dass sich der Auftriebskörper bei Wärme ausdehnt und im wärmeren Raum die nach oben gerichtete Bewegung ausführt. Vorzugsweise werden die Materialien, aus denen der Auftriebskörper gebildet ist, dabei so gewählt, dass die Erhöhung des Auftriebs aufgrund des größeren Volumens des Auftriebskörpers den Effekt des verringerten Auftriebs aufgrund des wärmeren Mediums überwiegt.

In einer Ausführungsform ist der Auftriebskörper als ein Hohlkörper ausgestaltet, in dessen Zentrum zumindest ein Hubzylinder angeordnet ist, welcher den Innenraum des Hohlkörpers umfasst. Der Hubzylinder kann sich relativ zum Hohlkörper in Richtung der Längsachse des Hubzylinders vor- und zurück bewegen, wobei die Bewegung durch die temperaturabhängige Ausdehnung des temperaturveränderlichen Mediums, welches vom Innenraum umfasst ist, bewirkt wird. Diese Art der Ausgestaltung des Auftriebskörpers bewirkt, dass sich der Auftriebskörper passgenau durch das Schleusensystem bewegen kann, wenn die Öffnung des Schleusensystem passgenau zum kleinsten lateralen Querschnitt des Auftriebskörpers ausgebildet ist. So kann der Hohlkörper z.B. zylinderförmig ausgestaltet sein, wobei der Durchmesser der Öffnung des Schleusensystems passgenau dem Außendurchmesser des Hohlkörpers entspricht. Damit kann vorteilhaft erreicht werden, dass sich der Hubzylinder vor- und zurück bewegen kann, ohne von der Abmessung der Öffnung des Schleusensystems begrenzt zu werden. In anderen Worten erfolgt die Bewegung des Hubzylinders parallel zur Bewegung des Auftriebskörpers durch das Endlosschienensystem.

Durch eine passgenaue Ausgestaltung der Öffnung des Schleusensystems kann vorteilhaft erreicht werden, dass das Schleusensystem in Wirkverbundenheit mit dem Auftriebskörper eine Sperre darstellt, die verhindert, dass sich die Medien des ersten und zweiten Raumes vermischen. Insbesondere wird durch die Wirkverbundenheit eine Temperatursperre ermöglicht, welche verhindert, dass sich die Temperaturen der vom ersten und vom zweiten Raum umfassten Medien einander angleichen. Bevorzugt umfasst das Material, aus welchem der Auftriebskörper zumindest teilweise gebildet ist, ein thermisch schlecht leitendendes oder isolierendes Material (mit einem weiter unten definierten Wärmeleitfähigkeitskoeffizienten), wie einem hierin definierten Kunststoff oder Holz.

Es versteht sich von selbst, dass der Auftriebskörper, sofern er als ein isolierendes Element innerhalb der Temperatursperre funktionieren soll, einerseits so ausgestaltet sein muss, dass er einem Wärmeübergang vom wärmeren Raum zum kälteren Raum vorbeugt und andererseits in der Lage ist Wärmeenergie in einem kurzen Zeitraum (bspw. innerhalb von 5 Minuten) aufzunehmen oder abzugeben, um seine mittlere Dichte wie hierin beschrieben zu ändern. Die kann bspw. dadurch erreicht werden, indem der Auftriebskörper zylinderförmig ausgestaltet wird, wobei die Stirnseiten des Zylinders aus einem thermisch schlecht leitenden Material gebildet sind, wohingegen die Mantelfläche des Zylinders aus einem thermisch gut leitenden Material mit einem Wärmeleitkoeffizienten von zumindest 20 Wm⁻¹K⁻¹ , bevorzugt von zumindest 50 Wm⁻¹K⁻¹, besonders bevorzugt von zumindest 100 Wm⁻¹K⁻¹, ganz besonders bevorzugt von zumindest 200 Wm⁻¹K⁻¹, und weiter bevorzugt von zumindest 300 Wm⁻¹K⁻¹ und weiter besonders bevorzugt von zumindest 400 Wm⁻¹K⁻¹. Bspw. kann die Mantelfläche des Zylinders als thermisch gut leitendes Material Kupfer umfassen. Dabei ist die Verwendung von Kupfer besonders vorteilhaft, da es sich um ein häufig vorkommendes und günstiges Metall handelt.

Die Temperatursperre dient somit der thermischen Entkopplung des ersten und zweiten Raumes voneinander und insbesondere der thermischen Entkopplung des ersten und des zweiten Mediums voneinander. Insbesondere wenn das erste und das zweite Medium chemisch identisch sind, kann das Schleusensystem oder die Temperatursperre so ausgestaltet sein, dass kleinere Leckagen, also ein Übertreten des ersten in das zweite oder des zweiten in das erste Medium, möglich sind. Dabei ist darauf zu achten, dass die Leckagen nur so groß sind, dass die Effizienz der Vorrichtung durch einen Übertritt der Medien, insbesondere einem Wärmeaustausch der Medien, nur unmaßgeblich beeinflusst oder reduziert wird, sodass dadurch vorzugsweise eine Temperaturänderung von bevorzugt weniger als 1 K pro Stunde, besonders bevorzugt von weniger als 0,5 K pro Stunde und ganz besonders bevorzugt von weniger als 0,1 K pro Stunde hervorgerufen wird. Die erfindungsgemäße thermische Entkopplung ist also nicht als absolut zu verstehen, sondern die durch die thermische Entkopplung bewirkte Isolierung des ersten vom zweiten Medium hängt maßgeblich davon ab, wie breit der Spalt zwischen Auftriebskörper und Schleusensystem ist. Vorzugsweise entspricht die Fläche des Spalts zwischen Auftriebskörper und Schleusensystem maximal 5 %, bevorzugt maximal 2 %, besonders bevorzugt maximal 1 % der Fläche der Öffnung des Schleusensystems. Vorteilhaft geht mit einer geringeren Fläche des Spalts eine geringer Leckage der Medien ineinander und einer bessere thermische Entkopplung einher.

Einem Übergang der Medien ineinander wird zusätzlich vorgebeugt, indem der Füllstand des ersten und des zweiten Raumes gleich ist.

Selbstverständlich sollte das Material, aus welchem das Endlosschienensystem gebildet ist, zumindest im Bereich um die Schleuse, ebenso ein thermisch schlecht leitendes Material vorzugsweise mit einem Wärmeleitfähigkeitskoeffizienten von maximal 1 Wm⁻¹K ¹, bevorzugt maximal 0,5 Wm⁻¹K⁻¹ , besonders bevorzugt von maximal 0,01 Wm⁻¹K⁻¹ (z.B. eine Keramik, insbesondere eine mit einem reibungsverringernden Element beschichtete Keramik, oder einen Kunststoff) umfassen, um zu verhindern, dass über das Endlosschienensystem ein Wärmeübergang vom ersten in den zweiten Raum oder andersherum erfolgt.

Insbesondere umfasst die Beschreibung eine Temperatursperrenvorrichtung, zur thermischen Entkopplung eines ersten Raumes von einem zweiten Raum oder zur thermischen Entkopplung eines ersten Mediums von einem zweiten Medium, wobei die Vorrichtung ein Schleusensystem und einen Auftriebskörper umfasst, wobei das Schleusensystem und der Auftriebskörper derart wirkverbunden sind, dass ein Übertreten des ersten Mediums in das zweite Medium oder ein Übertreten des zweiten Mediums in das erste Medium verhindert ist. Das Verhindern wird hierbei nicht als ein absoluter Begriff angesehen. Der Fachmann wird den Spalt zwischen dem Auftriebskörper und dem Schleusensystem bevorzugt so wählen, dass einerseits nur eine geringe Menge an Medium in das andere Medium übertreten kann und andererseits die Bewegung des Auftriebskörpers nicht maßgeblich beeinflusst wird. Der Fachmann muss die Temperatursperrenvorrichtug also so ausgestalten, dass ein möglichst reibungsarmes Gleiten des Auftriebskörpers durch das Schleusensystem und ein möglichst geringes Übergehen der Medien ineinander gewährleistet ist.

Weiter umfasst die Beschreibung eine Temperatursperrenvorrichtung zur thermischen Entkopplung eines ersten Raumes von einem zweiten Raum oder zur thermischen Entkopplung eines ersten Mediums von einem zweiten Medium, wobei die Vorrichtung ein Schleusensystem mit zumindest einer Öffnung und einen Auftriebskörper umfasst, wobei das Schleusensystem und der Auftriebskörpers so ausgestaltet sind, dass der Auftriebskörper durch die Öffnung des Schleusensystems hindurchführbar ist, wobei an der Öffnung des Schleusensystem zumindest ein Dichtungselement angeordnet ist, welches derart am Auftriebskörper anliegt, bevorzugt derart passgenau am Auftriebskörper anliegt, dass ein Übertreten des ersten Mediums in das zweite Medium oder ein Übertreten des zweiten Mediums in das erste Medium und/oder ein Temperaturaustausch zwischen dem ersten und dem zweiten Medium verhindert ist. Der Auftriebskörper ist bevorzugt so eingerichtet, dass er wie oben beschrieben in Richtung vom ersten zum zweiten oder in Richtung des zweiten zum ersten Raum thermisch isolierend ausgebildet ist, wodurch ein Wärmeübergang vom wärmeren zum kälteren Medium vorgebeugt ist. In einer Weiterbildung ist der Auftriebskörper so eingerichtet, dass er zusätzlich zur thermischen Isolation der Räume oder der Medien voneinander noch zu einer effizienten Wärmeaufnahme eingerichtet ist.

Unter der Richtung vom ersten zum zweiten Raum oder vom zweiten zum ersten Raum ist dabei die Richtung der Wärmeabgabe des wärmeren zum kälteren Medium zu verstehen.

Dabei kann die Öffnung des Schleusensystems wie hierin beschrieben ausgestaltet sein, so dass die Öffnung passgenau am Auftriebskörper anliegt, oder dass der Spalt wie oben beschrieben ausgestaltet ist.

Einem Übertreten der Medien ineinander kann besonders gut vorgebeugt werden, wenn das Schleusensystem so ausgestaltet ist, dass es flexibel an dem Auftriebskörper, bspw. über flexible Lippen anliegt. Weiterhin ist das Schleusensystem bevorzugt so ausgestaltet, dass das Dichtungselement ebenfalls zumindest teilweise aus einem thermisch schlecht leitenden Material (z.B. einem Kunststoff) ausgestaltet ist.

Es ist auch denkbar, dass der Innenraum des Hohlkörpers als ein technisches Element ein thermoresponsives Polymer umfasst, welches abhängig von der Temperatur des Fluids sein Volumen ändert. Weiterhin denkbar sind Formgedächtnispolymere, um das Volumen des Auftriebskörpers zu beeinflussen. So sind dem Fachmann Formgedächtnispolymere (z.B. Polymilchsäure) bekannt, welche unter Temperatureinwirkung ihre ursprüngliche Form einnehmen. Ein Auftriebskörper könnte beispielsweise so ausgestaltet sein, dass in dessen Innenraum ein Federelement oder ein pneumatisches Element angeordnet ist, welches zwischen zwei gegenüberliegenden Wandungen angeordnet ist und diese sowie ein Formgedächtnispolymerelement auseinanderdrückt, um das Volumen des Auftriebskörpers zu erhöhen. Ein Formgedächtnispolymerelement, welches sich unter Temperatureinwirkung zusammenzieht, kann der Länge nach parallel zur Feder angeordnet sein und der nach außen gerichteten Kraft der Feder entgegen wirken, um das Volumen des Auftriebskörpers und damit den spezifischen Auftrieb zu verringern. Alternativ kann der Innenraum des Hohlkörpers mit einem aufgeschäumten Formgedächtnispolymer ausgestaltet sein, um die mittlere Dichte des Auftriebskörpers temperaturabhängig zu verändern.

In einer alternativen Ausführungsform umfasst der Auftriebskörper zumindest ein Element aus einem Formgedächtnismetall. Das Material eines Formgedächtnismetalls umfasst beispielsweise Nitinol. Ein Formgedächtnismetall kann beispielsweise als eine Spirale ausgebildet sein und mit einem wie oben beschriebenen Federelement oder pneumatischen Element innerhalb des Auftriebskörpers wirkverbunden angeordnet sein, so dass sich die Spirale aus dem Formgedächtnismetall bei Erwärmung des Auftriebskörpers zusammenzieht, der Kraft des Federelements oder pneumatischen Elements entgegenwirkt und sich in der Folge das Volumen des Auftriebskörpers verringert. Vorteilhaft ergibt sich aus der Verwendung eines Formgedächtnismetalls eine verschleißärmere Nutzung der Auftriebskörper.

Es sind auch Ausführungsformen denkbar, bei denen zumindest ein Element aus einem Formgedächtnismetall sowie zumindest ein Element aus einem Formgedächtnispolymer kombiniert werden.

In einer weiteren Ausführungsform umspannt ein Polymernetz aus einem Formgedächtnispolymer den Auftriebskörper. Dabei kann der Auftriebskörper ein Gas enthalten, welches die Wandungen des Auftriebskörpers abhängig oder unabhängig von der Temperatur nach außen drückt. Das Polymernetz kann sich bei einer Temperaturerhöhung zusammenziehen und das Volumen des Auftriebskörpers und somit dessen mittlere Dichte verringern. Um das Polymernetz vom umgebenden Fluid abzugrenzen kann dieses mit einer weiteren -und flexiblen- Schicht versiegelt oder von einer Hülle vom umgebenden Fluid abgegrenzt sein. Vorteilhaft ergibt sich dadurch, dass das Polymernetz so schneller erwärmt oder abgekühlt werden kann.

Weiterhin kommen Formgedächtnispolymere in Betracht, die ihre Form abhängig von Licht ändern. So sind aus dem Stand der Technik lichtabhängige Polymere bekannt, die durch Lichteinstrahlung ionisiert werden, wodurch ein innerer osmotischer Druck entsteht, der ein Anschwellen des Polymers bewirkt. Sobald die Lichteinstrahlung entfällt, kollabiert das Gel. Insbesondere bei einer Ausgestaltung, welche sich eines lichtabhängigen Polymers bedient ist es vorteilhaft, wenn der Auftriebskörper ein Glas oder ein anderes transparentes Material umfasst, so dass das Licht durch die Außenwand des Auftriebskörpers dringen kann, um das dahinter befindliche lichtabhängige Polymer zu erreichen.

Es sind auch Kombinationen aller oben beschriebenen Ausführungsformen denkbar. So kann in einer Ausführungsform das äußere Polymernetz beispielsweise mit einer innerhalb des Auftriebskörpers befindlichen Federelement, und/oder einem Formgedächtnismetallelement und/oder einem Formgedächtnispolymerelement kombiniert werden. In weiteren Ausführungsformen können Formgedächtnispolymere verwendet werden, welche sich bei Temperaturerhöhung ausdehnen.

Um eine temperaturabhängige Änderung des Volumens des Auftriebskörpers zu ermöglichen ist es notwendig, dass der Auftriebskörper im ersten Raum einer anderen Temperatur ausgesetzt ist als im zweiten Raum. Dabei kann der Fachmann abhängig von den verwendeten Materialen des Auftriebskörpers, insbesondere der Formgedächtnismetalle oder Formgedächtnispolymere die notwendige Temperaturdifferenz bestimmen und diese bspw. mittels eines Wärmetauschers oder Heizelements bereitstellen. Insoweit kann die zur Verfügung gestellte Wärmeenergie in eine Auftriebsenergie und folglich in eine mechanische und/oder elektrische Energie umgewandelt werden. Insbesondere kann der Wärmetauscher die externe Energiequelle nutzen, um die zur Erwärmung des ersten und/oder zweiten Raumes notwendige Wärmemenge bereitzustellen.

Da für die oben beschriebene Funktion des Formgedächtnispolymers oder Formgedächtnismetalls auch geringe Temperaturdifferenzen des ersten und zweiten Raumes ausreichend sind, kann die Auftriebskraftnutzungsvorrichtung mit geringen Wärmeenergieeinträgen betrieben werden. Dadurch ergibt sich vorteilhaft, dass Temperaturänderungen von Prozessen, die nur eine geringe Wärmeabgabe aufweisen, nutzbar gemacht werden können. So ist beispielsweise denkbar, dass beispielsweise die Abwärme eines biologischen Prozesses (z.B. Gärung in einer Biogasanlage) in zumindest den ersten und/oder zweiten Raum geführt wird, um eine Temperaturänderung in diesem zu bewirken. Biogasanlagen werden häufig im mesophilen (20-45°C) oder thermophilen (>50°C) Bereich betrieben. Alternativ kann die Abwärme eines Verbrennungsprozesses die erfindungsgemäße Vorrichtung betreiben.

Gemäß einer Ausführungsform umfasst der Auftriebskörper zumindest eine Profilierung, welche dazu eingerichtet ist, in die Führungsschienen einzugreifen, um den Auftriebskörper zu stabilisieren. Die Profilierung kann ein oben beschriebenes reibungsverringerndes Element umfassen.

Gemäß der Erfindung umfasst die dem ersten und/oder zweiten Medium zugewandte Oberfläche des Auftriebskörpers eine Profilierung. Insbesondere ist die dem ersten und/oder zweiten Medium zugewandte Oberfläche des Auftriebskörpers als eine Profilierung ausgestaltet, die es erlaubt, dass das Endlosschienensystem ununterbrochen durch die Öffnung des Schleusensystems geführt werden kann, wodurch das Endlosschienensystem nicht unterbrochen werden muss.

Die Form des Auftriebskörpers kann im Wesentlichen zylinderförmig, eliptisch, konisch, kugelförmig, pyriform und/oder stromlinienförmig ausgestaltet sein, wobei auch Kombinationen davon denkbar sind. Da sich der Auftriebskörper in zumindest einem ersten und/oder zweiten Raum in einem Fluid bewegt, dessen mittlere Dichte größer ist als die des Auftriebskörpers, ist eine stromlinienförmige Form des Auftriebskörpers bevorzugt. Weiterhin wirkt auf die Unterseite eines Auftriebsköpers ein höherer hydrostatischer Druck als auf dessen Oberseite, was der Grund für dessen Auftrieb ist. Insofern wird eine im Wesentlichen konische Form des Auftriebskörpers bevorzugt. Die genaue Form, als auch die Größe der Auftriebskörper kann dabei vom Fachmann abhängig von den verwendeten Fluiden und Materialien gewählt werden.

In einer Ausführungsform ist die Bewegung des Auftriebskörpers, insbesondere im zweiten Raum, durch die Gravitation beeinflussbar. Dies ist so zu verstehen, dass sich der Auftriebskörper im ersten Raum in einem darin befindlichen Fluid durch Auftrieb entgegen der Erdanziehungskraft nach oben bewegt. Nachdem der Auftriebskörper einen Umkehrpunkt passiert hat, gelangt er in den zweiten Raum, in welchem das Fluid eine geringere mittlere Dichte aufweist als die des Auftriebskörpers. Der Auftriebskörper kann im zweiten Raum also der Kraftwirkung der Gravitation folgen (auch: fallen) und auf der zurückgelegten Strecke Arbeit verrichten, indem die potentielle Energie, wie oben beschrieben, durch einen Umwandler in eine elektrische oder mechanische Energie umgewandelt wird.

In einer weiteren Ausführungsform umfasst ein Auftriebskörper zumindest ein magnetisches Element, wobei entlang des Endlosschienensystems zumindest eine Spule um dieses angeordnet ist. Während des Auftriebs als auch des Falls bewegt sich der Auftriebskörper somit durch die Spule und kann in dieser einen elektrischen Strom induzieren, welcher abgenommen werden kann.

Gemäß einer besonders bevorzugten Ausführungsform sieht die Vorrichtung einen Wärmetauscher und/oder ein Heizelement vor, um zumindest im ersten und/oder im zweiten Raum eine Temperaturänderung zu induzieren. Bevorzugt wird durch den Wärmetauscher in nur einem der Räume, z.B. im ersten Raum eine Temperaturänderung bewirkt. Diese Temperaturänderung, bevorzugt eine Temperaturerhöhung, bewirkt eine Erhöhung der Temperatur des Auftriebskörpers und dadurch eine Verringerung der mittleren Dichte des Auftriebskörpers und somit einen erhöhten Auftrieb im Vergleich zu einem nicht erwärmten Auftriebskörper. Der erwärmte Auftriebskörper steigt dann innerhalb des erwärmten Raumes auf, bis er am oberen Umkehrpunkt angelangt wieder in den zweiten Raum gelangt. Im zweiten Raum ist die Temperatur bevorzugt geringer als im ersten Raum, wodurch sich die mittlere Dichte des Auftriebskörpers erneut ändert und er nach unten sinkt, bis er am unteren Umkehrpunkt angekommen, wieder einer erhöhten Temperatur des ersten Raumes ausgesetzt ist und sich der Vorgang wiederholt.

Die durch einen Wärmetauscher oder ein Heizelement bewirkte Temperaturänderung erfolgt möglichst in unmittelbarer Umgebung des unteren oder oberen Umkehrpunktes und/oder in unmittelbarer Umgebung des Auftriebskörpers, wobei die Positionierung sowie die Entfernung des Wärmetauschers oder des Heizelements zum Auftriebskörper vom Fachmann bestimmt werden kann. Die Positionierung und die Entfernung sollte so gewählt werden, dass eine möglichst effiziente Temperaturänderung des Auftriebskörpers induziert wird und gleichzeitig sichergestellt wird, dass eine Temperaturänderung im ersten oder zweiten Raum nicht oder nur geringfügig eine Temperaturänderung im zweiten oder ersten Raum bewirkt, abhängig davon, in welchem der Räume sich der Wärmetauscher befindet. Es versteht sich von selbst, dass der erste und/oder zweite Raum isolierende Elemente umfassen muss, um die Temperaturänderung auf einen bestimmten Bereich zu begrenzen.

Um in dem ersten oder zweiten Raum eine Temperaturänderung zu induzieren, umfasst eine Ausführungsform der Erfindung einen Wärmetauscher umfassend einen Primär- und einen Sekundärkreislauf, wobei beide Kreisläufe nicht miteinander fluidverbunden sind. Der Wärmetauscher kann innerhalb des ersten Raumes angeordnet sein, wobei der Sekundärkreislauf das Medium des ersten Raumes umfasst, während der Primärkreislauf des Wärmetauschers ein drittes Medium/ Fluid führt, welches die Abwärme eines Wärme erzeugenden biologischen Prozesses (z.B. Gärung), und/oder eines physikalischen Prozesses (z.B. Solarthermie), und/oder eines chemischen Prozesses (z.B. Verbrennung) führt. In einer alternativen Ausführungsform kann der Wärmetauscher auch im zweiten Raum angeordnet sein. Weiterhin ist es denkbar, dass der Wärmetauscher eine Temperaturverringerung im ersten und/oder zweiten Raum induziert, indem dessen Primärkreislauf ein Fluid führt, welches kälter ist als der Auftriebskörper.

Gemäß einer Ausführungsform umfasst der Primärkreislauf ein drittes Medium, welches eine höhere Temperatur aufweist als das erste Medium des ersten Raumes, wobei das dritte Medium mit dem ersten Medium nicht fluidverbindbar ist. Bei dem dritten Medium kann es sich um ein Fluid handeln, welches einen zumindest doppelt so hohen Siedepunkt aufweist, wie das erste oder zweite Medium. Bspw. kann es sich bei dem dritten Medium um ein Flüssigsalz handeln. Die Verwendung eines dritten Mediums erlaubt vorteilhaft ein effektiveres Erwärmen des ersten und/oder zweiten Mediums.

In einer Ausgestaltung der Erfindung wird auf einen Wärmetauscher verzichtet, wobei zumindest einer der Räume so ausgestaltet ist, dass das erste und/oder zweite Medium durch ein Medium mit einer anderen Temperatur austauschbar ist. So ist bspw. vorstellbar, dass statt eines Wärmetauschers das erste und/oder zweite Medium durch den ersten und/oder zweiten Raum, vorzugsweise das erste Medium durch den ersten Raum, hindurchgeleitet wird. Dabei wird von außen, also von außerhalb des ersten und/oder zweiten Raumes, das erste und/oder zweite Medium zugeführt und auch wieder nach außen abgeführt. Vorteilhaft kann so auf die Konstruktion eines Wärmetauschers verzichtet werden. Bei dem hindurchgeleiteten ersten oder zweiten Medium kann es sich bspw. um Wasser aus einem Kühlkreislauf oder um Abwärme abführendes Wasser handeln.

In einer Ausführungsform wird das erste Medium durch geothermische Prozesse aufgeheizt und in den ersten Raum geführt, um dort die Auftriebskörper aufzuheizen, während das zweite Medium, welches kühler, bevorzugt um zumindest 20 K kühler, besonders bevorzugt um zumindest 30 K kühler und ganz besonders bevorzugt um zumindest 40 K kühler ist als das erste Medium, durch den zweiten Raum geleitet wird, um dort die Auftriebskörper abzukühlen. In einer weiteren Ausführungsform ist die Vorrichtung so ausgestaltet, dass das zweite Medium nach der Passage durch den zweiten Raum in eine Vorrichtung geführt wird, welche dazu dient, das zweite Medium aufzuheizen, bspw. durch geothermische Prozesse aufzuheizen, und das zweite Medium dann in den ersten Raum geleitet wird, wo es die Wärmeenergie an die Auftriebskörper abgibt.

Nach einer vorteilhaften Ausführungsform führt ein Wärmetauscher auch ein drittes Medium, welches als Kühlmittel ausgestaltet ist, um die Temperatur im ersten und/oder zweiten Raum zu verringern. Alternativ kann der erste und/oder zweite Raum, vorzugsweise nur einer der beiden, von einem Kühlmittel durchflossen werden, so dass im Raum befindliche Auftriebskörper abgekühlt werden.

In einer Ausgestaltung der Erfindung weisen das erste und das zweite Medium die gleiche chemische Struktur auf. So kann erste und der zweite Raum beispielsweise Wasser oder Öl enthalten. Der Auftriebskörper kann sich durch beide Räume bewegen, wobei auch die Übergangsbereiche mit dem ersten und zweiten Raum fluidverbunden sind. Zwischen dem ersten und dem zweiten Raum kann eine Schleusensystem angeordnet sein, welches eine Wärmediffusion des ersten zum zweiten Raumes verhindert oder erschwert. Vorteilhaft ergibt sich dadurch, dass der Auftriebskörper erst im designierten Raum einer maximalen Temperaturänderung ausgesetzt ist um das Volumen und somit den Auftrieb des Auftriebskörpers zu beeinflussen. In einer alternativen Ausführungsform kann auf ein Schleusensystem verzichtet werden.

In einer weiteren Ausführungsform führt der Primärkreislauf, also das dritte Medium, des Wärmetauschers die Abwärme eines Sonnenkollektors oder eines anderen oben beschriebenen Abwärme-produzierenden Prozesses, wobei die Temperatur des dritten Mediums veränderbar ist.

Die Beschreibung betrifft ein Verfahren zum Verwenden der Auftriebskraftnutzungsvorrichtung umfassend ein Bewegen des Auftriebskörpers in einem ersten Raum durch Auftrieb, Bewegen des Auftriebskörpers in einem zweiten Raum durch Gravitation, wobei die Bewegung des Auftriebskörpers entlang eines Endlosschienensystems erfolgt.

Insbesondere betrifft die Beschreibung ein Verfahren zum Betreiben einer Auftriebskraftnutzungsvorrichtung und Umwandeln von Wärmeenergie in elektrische und/oder mechanische Energie, wobei das Verfahren einen ersten Raum und einen zweiten Raum und zumindest einen Auftriebskörper, ein erstes Medium und ein zweites Medium, einen Wärmetauscher, ein Endlosschienensystem, einen Umwandler, der dazu eingerichtet ist, Bewegungsenergie des Auftriebskörpers in eine elektrische Energie umzuwandeln, bereitstellt. Das Verfahren umfasst die Umwandlung der durch den Wärmetauscher in den ersten und/oder zweiten Raum eingebrachten Wärmeenergie in elektrische Energie. Dies erfolgt, indem die mittlere Dichte des Auftriebskörpers durch den Wärmeenergieeintrag wie oben beschrieben, beeinflusst wird.

Weiterhin betrifft die Beschreibung ein Verfahren zum Betreiben einer Auftriebskraftnutzungsvorrichtung und zum Umwandeln von Wärmeenergie in elektrische Energie umfasst als Schritte das Bereitstellen eines ersten Raums und eines zweiten Raums und zumindest eines Auftriebskörpers, eines ersten Mediums und eines zweiten Mediums, eines Wärmetauschers, eines Endlosschienensystems und eines Umwandlers, der dazu eingerichtet ist, die Bewegungsenergie des Auftriebskörpers, verursacht durch dessen Auftrieb, in eine elektrische Energie umzuwandeln, wobei die Bewegung des Auftriebskörpers entlang eines Endlosschienensystems erfolgt, wobei durch den Wärmetauscher ein Wärmeenergieeintrag in den ersten und/oder zweiten Raum erfolgt, wobei die mittlere Dichte des Auftriebskörpers, wie hierin beschrieben, durch den Wärmeenergieeintrag beeinflusst wird.

Zudem betrifft die Beschreibung ein Verfahren zum Umwandeln von Wärmeenergie in elektrische Energie und umfasst das Bereitstellen einer hierin definierten Auftriebskraftnutzungsvorrichtung, einen Umwandler, der dazu eingerichtet ist, Bewegungsenergie des Auftriebskörpers, insbesondere aus einer aufgrund des Auftriebs des Auftriebskörpers bewirkten Bewegung, in eine elektrische Energie umzuwandeln, wobei die Bewegung, insbesondere die durch das Endlosschienensystem geführte Bewegung, des Auftriebskörpers entlang des Endlosschienensystems erfolgt, wobei durch den Wärmetauscher ein Temperaturunterschied zwischen dem ersten und dem zweiten Raum induziert, wobei die mittlere Dichte und der Auftrieb des Auftriebskörpers durch den Temperaturunterschied erhöht oder verringert wird, wobei der Auftriebskörper im ersten und im zweiten Raum abhängig von seiner mittleren Dichte eine Bewegung, bevorzugt eine Bewegung entlang des Endlosschienensystems ausführt, wobei die Bewegung durch den Umwandler in eine elektrische Energie umgewandelt wird.

Bevorzugt erfolgt der Wärmeenergieeintrag in den ersten Raum. Der Wärmeenergieeintrag kann aber auch in den zweiten Raum, statt den ersten Raum, erfolgen. Durch den Wärmenergieeintrag zumindest eines der Medien, bevorzugt nur eines der Medien, also des ersten Mediums oder zweiten Mediums, weiter bevorzugt des ersten Mediums, wird der Auftriebskörper erwärmt und ändert infolgedessen seine mittlere Dichte, wie hierin beschrieben. Der Auftriebskörper bewegt sich abwechselnd vom ersten in den zweiten Raum, wobei die Temperaturdifferenz der Räume, insbesondere der von diesen umfassten Medien, zumindest größer ist als 5 K, bevorzugt größer ist als 10 K, besonders bevorzugt größer ist als 20 K, ganz besonders bevorzugt größer ist als 30 K und weiter bevorzugt größer ist als 40 K. Mit einer größeren Temperaturdifferent geht vorteilhaft eine effizientere Abkühlung oder Aufwärmung des Auftriebskörpers einher.

In einer Ausführungsform des Verfahrens wird der Wärmeenergieeintrag in den ersten und/oder zweiten Raum durch geothermische Prozesse und/oder Solarthermie und/oder Abwärme produzierende Prozesse, oder weitere hierin beschriebene Prozesse bereitgestellt.

Weitere Vorteile, Merkmale und Anwendungsmöglichkeiten der vorliegenden Erfindung ergeben sich auch aus der nachfolgenden Beschreibung von Ausführungsbeispielen und den Zeichnungen.

### AUSFÜHRUNGSBEISPIELE

Anhand folgender Figuren und Ausführungsbeispiele wird die vorliegende Erfindung näher erläutert, ohne die Erfindung auf diese zu beschränken.

In den unterschiedlichen Figuren sind hinsichtlich ihrer Funktion gleichwertige Teile stets mit denselben Bezugszeichen versehen, sodass diese in der Regel auch nur einmal beschrieben werden.

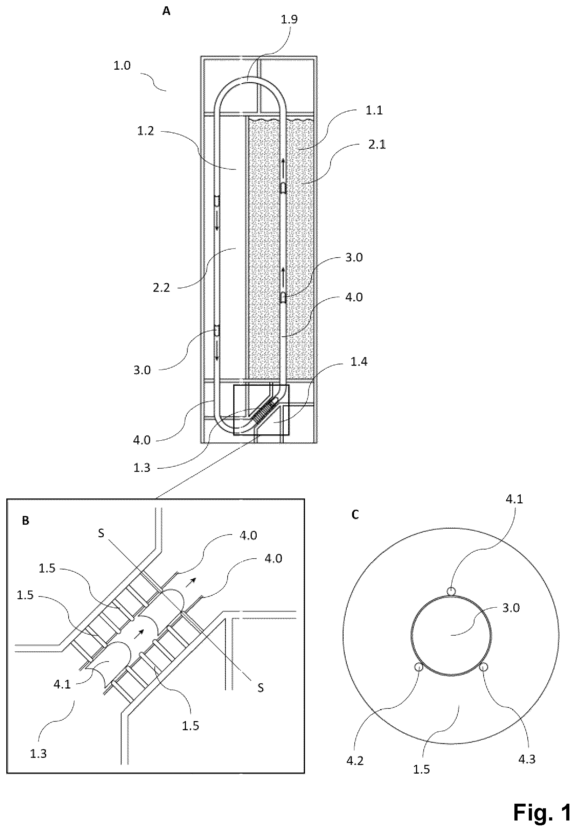

Die Fig. 1A-C zeigt eine Ausführungsform der Auftriebskraftnutzungsvorrichtung (1.0), die einen ersten Raum (1.1), der mit einem ersten Medium (2.1) (hier: Wasser) gefüllt ist sowie einen zweiten Raum (1.2), der mit einem zweiten Medium (2.2) (hier: Luft) gefüllt ist umfasst. Weiterhin umfasst die Vorrichtung Auftriebskörper (3.0), welche innerhalb einer umlaufenden Führung (4.0), die als Endlosschienensystem ausgestaltet ist, führbar sind. Der erste Raum (1.1) und der zweite Raum (1.2) sind durch ein Schleusensystem (1.3) voneinander abgetrennt, wobei dieses am unteren Umkehrpunkt (1.4) angeordnet ist. in Fig. 1B vergrößert dargestellte Schleusensystem (1.3) umfasst hier mehrere hintereinandergeschaltete Lippendichtungen (1.5), deren Innendurchmesser passgenau zum Querschnitt der Auftriebskörper (3.0) ausgestaltet ist. Die Auftriebskörper (3.0) sind als Hohlkörper aus Polyethylen gefertigt und mit Polytetrafluorethylen ummantelt, so dass die Auftriebskörper (3.0) möglichst reibungsarm durch das Endlosschienensystem (4.0) führbar sind. Entlang des Endlosschienensystems (4.0) sind nicht dargestellte Umwandler angeordnet, welche die kinetische Energie der Auftriebskörper (3.0) beim Aufstieg im ersten Raum (1.1) sowie auch beim Fall im zweiten Raum (1.2) in eine elektrische Energie umwandeln. Die Fig. 1C zeigt die Ansicht der in Fig. 1B dargestellten Schnittebene S-S. Die umlaufende Führung (4.0) umfasst hier eine erste Führungsschiene (4.1), eine zweite Führungsschiene (4.2) und eine dritte Führungsschiene (4.3), wobei die Führungsschienen in einem Winkel von 120° zueinander angeordnet sind. Der Innendurchmesser der Lippendichtung (1.5) ist passgenau zum Querschnitt des Auftriebskörpers (3.0) ausgestaltet, so dass vorteilhaft kein erstes Medium (2.1) zwischen Auftriebskörper (3.0) und Lippendichtung (1.5) dringen kann. Die Führungsschienen (4.1, 4.2, 4.3) stabilisieren einerseits die Lippendichtung und dienen andererseits der kontinuierlichen Durchführung des Auftriebskörpers (3.0) durch die umlaufende Führung (4.0). Alternativ können auch nur zwei Führungsschienen verwendet werden, die im 180° Winkel zueinander angeordnet sind.

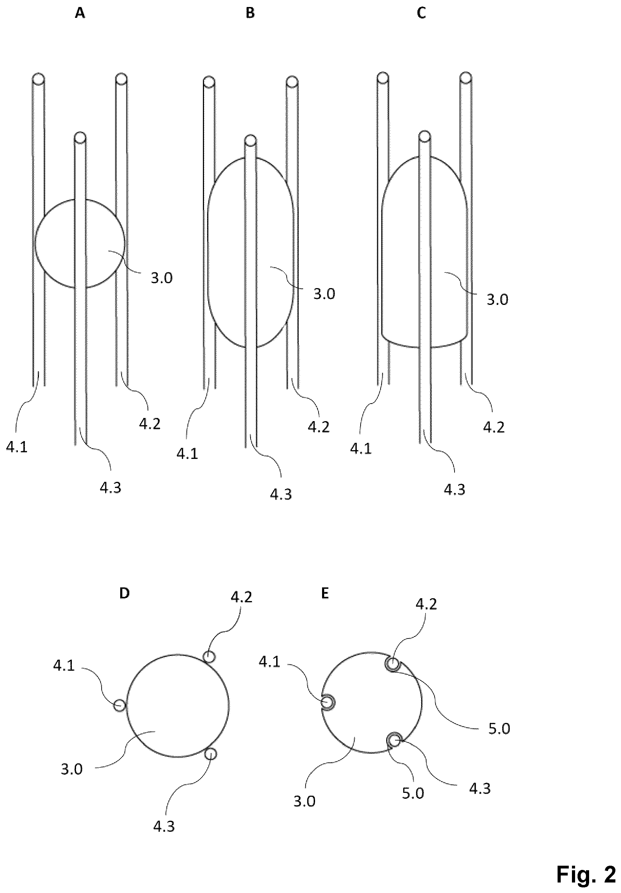

In der **Fig. 2A** und **Fig. 2B** und **Fig. 2C** ist jeweils eine Ausführungsform eines Auftriebskörpers (3.0) dargestellt, der im Wesentlichen ein im Querschnitt kreisförmiges Profil aufweist. Der Auftriebskörper (3.0) ist innerhalb von drei Führungsschienen (4.1, 4.2, 4.3) angeordnet, so dass der Auftriebskörper (3.0) nur in Längsrichtung der Führungsschienen (4.1, 4.2, 4.3) beweglich ist. **Fig. 2D** zeigt den in Fig. 2B dargestellten Auftriebskörper (3.0) mit den Führungsschienen (4.1, 4.2, 4.3), wobei diese in einem Winkel von 120° zueinander angeordnet sind. **Fig. 2E** zeigt eine davon abgewandelte Ausführungsform, wobei die Außenseite des Auftriebskörpers (3.0) so ausgestaltet ist, dass diese Profilierungen (5.0) aufweist, in welche die Führungsschienen (4.1, 4.2, 4.3) eingreifend geführt sind. Mit dieser Profilierung kann vorteilhaft eine Drehbewegung des Auftriebskörpers (3.0) um seine Längsachse verhindert werden.

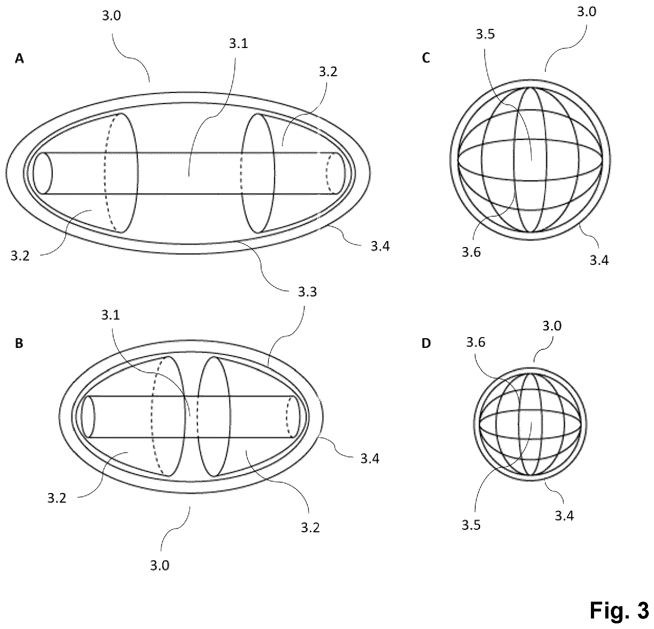

Die **Fig. 3A** und **Fig. 3B** zeigt eine weitere Ausführungsform eines Auftriebskörpers (3.0) dessen mittlere Dichte und damit sein Auftrieb von einer Temperaturänderung abhängig ist. Dabei umfasst der Auftriebskörper (3.0) ein zentrisch angeordnetes pneumatisches Element (3.1) dessen Funktion darin besteht, die Formschalen (3.2) auseinander zu bewegen, um die mittlere Dichte des Auftriebskörpers (3.0) zu verringern, wodurch dessen Auftrieb erhöht wird. Sobald sich der Auftriebskörper (3.0) erwärmt, zieht sich eine thermoresponsive Polymerhülle (3.3), welche die Formschalen (3.2) ummantelt, zusammen, wobei die durch das Zusammenziehen der thermoresponsiven Polymerhülle (3.3) ausgeübten Kräfte denen des pneumatischen Elements entgegen wirken. Innerhalb des pneumatischen Elements (3.1) kann auch eine Feder angeordnet sein. Dabei ist die maximale Kraft des pneumatischen Elements (3.1) so eingestellt, dass die Kraft der thermoresponsiven Polymerhülle (3.3) einen größeren Betrag hat, sobald eine Sprungtemperatur erreicht ist. Durch ein Zusammenziehen der thermoresponsiven Polymerhülle (3.3) verringert sich die mittlere Dichte und damit der Auftrieb des Auftriebskörpers (3.0). Verringert sich die Temperatur wieder, überwiegt die nach außen gerichtete Kraft des pneumatischen Elements (3.1) und der Auftrieb erhöht sich wieder. Die thermoresponsive Polymerhülle (3.3) ist hier zusätzlich von einer flüssigkeitsabweisenden Hülle (3.4) aus einem dehnbaren Kunststoff umgeben. Den geringsten Auftrieb hat ein vollständig komprimierter Auftriebskörper. Den größten Auftrieb hat ein vollständig dekomprimierter Auftriebskörper. Die Fig. 3A zeigt dabei den dekomprimierten Auftriebskörper (3.0) und die Fig. 3B zeigt einen komprimierenden Auftriebskörper (3.0).

In der **Fig. 3C** und **Fig. 3D** ist eine weitere Ausführungsform eines Auftriebskörpers (3.0) dargestellt. Hier umfasst der Auftriebskörper (3.0) einen gasgefüllten pneumatischen Hohlkörper (3.5), welcher von einem thermoresponsiven Polymernetz (3.6) und einer flüssigkeitsabweisenden Hülle (3.4) ummantelt ist. Das Funktionsprinzip entspricht dem oben beschriebenen, wobei die Fig. 3C den dekomprimierten Auftriebskörper (3.0) und die Fig. 3D den komprimierten Auftriebskörper (3.0) zeigt.

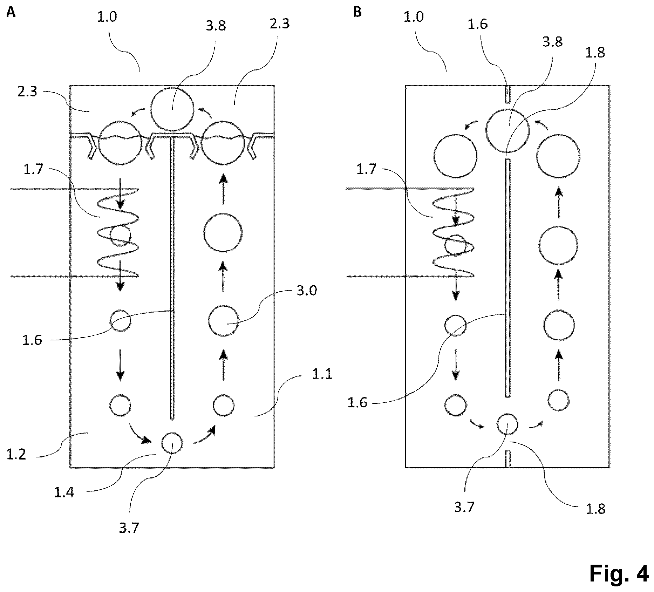

Die **Fig. 4A** zeigt eine Ausführungsform der Auftriebskraftnutzungsvorrichtung (1.0), wobei hier Auftriebskörper (3.0) dargestellt sind, deren mittlere Dichte wie oben beschrieben temperaturveränderlich ist. Das Endlosschienensystem ist hier nicht dargestellt, aber so ausgeführt, dass die komprimierten Auftriebskörper (3.7) sowie die dekomprimierten Auftriebskörper (3.8) innerhalb des Endlosschienensystems beweglich sind. Es ist also zwischen dem Endlosschienensystem und dem Auftriebskörper vorzugsweise so viel Spiel, dass der dekomprimierte sowie der komprimierte Auftriebskörper innerhalb des Endlosschienensystems führbar ist. Hier umfasst die Auftriebskraftnutzungsvorrichtung (1.0) einen durch eine isolierende Trennwand (1.6) voneinander abgegrenzten ersten Raum (1.1) und einen zweiten Raum (1.2), wobei in beiden Räumen das gleiche Medium (hier: Wasser) enthalten ist. Im zweiten Raum (1.2) ist ein Wärmetauscher (1.7) angeordnet, der die Abwärme einer Biogasanlage führt. Der Wärmetauscher (1.7) bewirkt eine Temperaturerhöhung der durch ihn geführten Auftriebskörper (3.0), welche wie oben angegeben ausgestaltet sind und ihre mittlere Dichte verringern. Am unteren Umkehrpunkt (1.4) angekommen erhöht sich der Auftrieb wieder, wodurch die Auftriebskörper (3.0) nach oben steigen. Am oberen Ende des ersten Raums (1.1) und es zweiten Raums (1.2) ist ein Luftraum (2.3) angeordnet. Dieser dient als Isolator um eine Wärmeübertragung des zweiten Raums (1.2) in den ersten Raum (1.1) zu minimieren. Nicht dargestellt sind Umwandler, welche die kinetische Energie der Auftriebskörper in eine elektrische Energie umwandeln. In der **Fig. 4B** ist eine von Fig. 4A leicht abgewandelte Ausführungsform dargestellt, wobei hier kein Luftraum vorhanden ist. Stattdessen sind der erste Raum (1.1) und der zweite Raum (1.2) durch eine isolierende Trennwand (1.6) voneinander abgetrennt, wobei diese so ausgeführt ist, dass einer Wärmediffusion vom zweiten Raum (1.2) in den ersten Raum (1.1) vorgebeugt wird, indem beispielsweise die Trennwandöffnungen (1.8) so ausgestaltet sind, dass zwischen der isolierenden Trennwand (1.6) und dem Auftriebskörper (3.0) möglichst wenig Wasser diffundieren kann. Die Trennwandöffnungen (1.8) können sind eine Ausführungsform eines erfindungsgemäßen Schleusensystems.

Die Größenverhältnisse der beschriebenen Komponenten sind nicht maßstabsgetreu dargestellt. Zudem sind die gezeigten Ausführungsformen der Erfindung jeweils beispielhaft und nicht beschränkend zu verstehen. Die Erfindung kann auch auf hiervon abweichende Weise ausgeführt werden.

### BEZUGSZEICHENLISTE

- 1.0: Auftriebskraftnutzungsvorrichtung
- 1.1: erster Raum
- 1.2: zweiter Raum
- 1.3: Schleusensystem
- 1.4: unterer Umkehrpunkt
- 1.5: Dichtungselement/ Lippendichtung
- 1.6: isolierende Trennwand
- 1.7: Wärmetauscher/ Heizelement
- 1.8: Trennwandöffnungen
- 1.9: oberer Umkehrpunkt
- 2.1: erstes Medium
- 2.2: zweites Medium
- 2.3: Luftraum
- 3.0: Auftriebskörper
- 3.1: pneumatisches Element
- 3.2: Formschalen
- 3.3: thermoresponsive Polymerhülle
- 3.4: flüssigkeitsabweisende Hülle
- 3.5: pneumatischer Hohlkörper
- 3.6: thermoresponsives Polymernetz
- 3.7: komprimierter Auftriebskörper
- 3.8: dekomprimierter Auftriebskörper
- 4.0: umlaufende Führung/ Endlosschienensystem
- 4.1: erste Führungsschiene
- 4.2: zweite Führungsschiene
- 4.3: dritte Führungsschiene
- 5.0: Profilierung

## Patentansprüche

1. **Auftriebskraftnutzungsvorrichtung** (1.0) zur Nutzung und Umwandlung von kinetischer Auftriebsenergie und/oder potentieller Energie in mechanische und/oder elektrische Energie, umfassend die folgenden Komponenten:
a) einen ersten Raum (1.1), der mit einem ersten Medium (2.1) gefüllt ist,
b) einen zweiten Raum (1.2), der mit einem zweiten Medium (2.2) gefüllt ist,
c) zumindest einen Auftriebskörper (3.0),
d) eine umlaufende Führung (4.0), wobei eine Bewegung zumindest eines Auftriebskörpers (3.0) entlang der umlaufenden Führung (4.0) erfolgt,
wobei die umlaufende Führung (4.0) durch den ersten Raum (1.1) und den zweiten Raum (1.2) verläuft,
wobei der erste Raum (1.1) und der zweite Raum (1.2) an zumindest einer Stelle durch ein Schleusensystem (1.3) voneinander getrennt sind,
wobei das Schleusensystem (1.3) eine permanente Öffnung aufweist,
wobei der Auftriebskörper derart ausgestaltet ist, dass seine mittlere Dichte und sein Auftrieb abhängig von einer Temperatur ist,
wobei sich die Temperatur des ersten Mediums (2.1) und des zweiten Mediums (2.2) unterscheidet,
wobei die Vorrichtung derart eingerichtet ist, dass eine externe Energiequelle einen Temperaturunterschied zwischen dem ersten (1.1) und zweiten Raum (1.2) induziert,
**dadurch gekennzeichnet, dass** die umlaufende Führung (4.0) ein Endlosschienensystem umfasst,
wobei die dem ersten Medium (2.1) und/oder zweiten Medium (2.2) zugewandte Oberfläche des Auftriebskörpers (3.0) eine Profilierung (5.0) umfasst.

2. Vorrichtung gemäß Anspruch 1, wobei der Auftriebskörper (3.0) als ein Hohlkörper ausgebildet ist, wobei das Material des Hohlkörpers ein Metall, einen Kunststoff, ein Glas, oder ein organisches Material umfasst.

3. Vorrichtung gemäß Anspruch 2, wobei der Hohlkörper ein Gas und/oder ein Polymer umfasst, wobei die mittlere Dichte des Auftriebskörpers (3.0) durch die Ausdehnung des Gases und/oder des Polymers beeinflussbar ist, wobei die Ausdehnung des Gases und/oder des Polymers abhängig von einer Temperaturänderung im ersten und/oder zweiten Raum ist.

4. Vorrichtung gemäß einem der Ansprüche 1 bis 3, wobei ein Wärmetauscher (1.7) und/oder ein Heizelement vorgesehen ist, um zumindest im ersten und/oder im zweiten Raum eine Temperaturänderung zu induzieren.

5. Vorrichtung gemäß Anspruch 4, wobei durch den Wärmetauscher oder das Heizelement die Temperaturänderung in unmittelbarer Umgebung des unteren Umkehrpunktes (1.4) und/oder in unmittelbarer Umgebung des oberen Umkehrpunktes (1.9) und/oder in unmittelbarer Umgebung des Auftriebskörpers (3.0) induzierbar ist.

6. Vorrichtung gemäß Anspruch 4 oder 5, wobei der Wärmetauscher einen Primär- und einen Sekundärkreislauf umfasst, wobei beide Kreisläufe nicht miteinander fluidverbunden sind.

7. Vorrichtung gemäß Anspruch 6, wobei ein Sonnenkollektor und/oder ein Abwärmeproduzierender Prozess derart mit dem Primärkreislauf wirkverbunden ist, sodass die Temperatur eines dritten Mediums veränderbar ist

## Claims

1. **Buoyancy force utilisation device** (1.0) for utilising and converting kinetic buoyancy energy and/or potential energy into mechanical and/or electrical energy , comprising the following components:
a) a first chamber (1.1) filled with a first medium (2.1),
b) a second chamber (1.2) filled with a second medium (2.2),
c) at least one buoyancy body (3.0),
d) a circumferential guide (4.0), wherein at least one buoyancy body (3.0) moves along the circumferential guide (4.0),
wherein the circumferential guide (4.0) runs through the first chamber (1.1) and the second chamber (1.2),
wherein the first chamber (1.1) and the second chamber (1.2) are separated from each other at at least one point by a sluice system (1.3),
wherein the sluice system (1.3) has a permanent opening,
wherein the buoyancy body is designed such that its average density and buoyancy depend on a temperature,
wherein the temperature of the first medium (2.1) and the second medium (2.2) differs,
wherein the device is arranged such that an external energy source induces a temperature difference between the first (1.1) and second (1.2) chamber,
**characterised in that** the circumferential guide (4.0) comprises an endless rail system,
wherein the surface of the buoyancy body (3.0) facing the first medium (2.1) and/or second medium (2.2) comprises a profiling (5.0).

2. Device according to claim 1, wherein the buoyancy body (3.0) is designed as a hollow body, wherein the material of the hollow body comprises a metal, a plastic, a glass, or an organic material.

3. Device according to claim 2, wherein the hollow body comprises a gas and/or a polymer, wherein the average density of the buoyancy body (3.0) can be influenced by the expansion of the gas and/or the polymer, wherein the expansion of the gas and/or the polymer is dependent on a temperature change in the first and/or second chamber.

4. Device according to one of claims 1 to 3, wherein a heat exchanger (1.7) and/or a heating element is provided to induce a temperature change at least in the first and/or second chamber.

5. Device according to claim 4, wherein the heat exchanger or the heating element can induce the temperature change in the immediate vicinity of the lower reversal point (1.4) and/or in the immediate vicinity of the upper reversal point (1.9) and/or in the immediate vicinity of the buoyancy body (3.0).

6. Device according to claim 4 or 5, wherein the heat exchanger comprises a primary and a secondary circuit, wherein both circuits are not fluidically connected to each other.

7. Device according to claim 6, wherein a solar collector and/or a waste heat-producing process is operatively connected to the primary circuit in such a way that the temperature of a third medium can be changed.

## Revendications

1. Dispositif d'utilisation de la force de portance (1.0) destiné à utiliser et à convertir l'énergie cinétique de portance et/ou l'énergie potentielle en énergie mécanique et/ou électrique, comprenant les composants suivants :
a) un premier espace (1.1) rempli d'un premier fluide (2.1),
b) un deuxième espace (1.2) rempli d'un deuxième fluide (2.2),
c) au moins un corps flottant (3.0),
d) un guide périphérique (4.0), un mouvement d'au moins un corps flottant (3.0) ayant lieu le long du guide périphérique (4.0),
le guide périphérique (4.0) s'étendant à travers le premier espace (1.1) et le deuxième espace (1.2),
le premier espace (1.1) et le deuxième espace (1.2) étant séparés l'un de l'autre en au moins un emplacement par un système de sas (1.3),
le système de sas (1.3) présentant une ouverture permanente,
le corps flottant étant conçu de telle sorte que sa densité moyenne et sa flottabilité dépendent d'une température,
la température du premier fluide (2.1) et celle du deuxième fluide (2.2) étant différentes,
le dispositif étant adapté de telle sorte qu'une source d'énergie externe induise une différence de température entre le premier (1.1) et le deuxième espace (1.2), **caractérisé en ce que** le guide périphérique (4.0) comprend un système de rail sans fin,
la surface du corps flottant (3.0) tournée vers le premier milieu (2.1) et/ou le deuxième milieu (2.2) comprenant un profilage (5.0).

2. Dispositif selon la revendication 1, dans lequel le corps flottant (3.0) est réalisé sous la forme d'un corps creux, le matériau du corps creux comprenant un métal, une matière plastique, un verre ou un matériau organique.

3. Dispositif selon la revendication 2, dans lequel le corps creux comprend un gaz et/ou un polymère, la densité moyenne du corps flottant (3.0) pouvant être influencée par la dilatation du gaz et/ou du polymère, la dilatation du gaz et/ou du polymère dépendant d'un changement de température dans le premier et/ou le deuxième espace.

4. Dispositif selon l'une quelconque des revendications 1 à 3, dans lequel un échangeur thermique (1.7) et/ou un élément chauffant est prévu pour induire un changement de température au moins dans le premier et/ou le deuxième espace.

5. Dispositif selon la revendication 4, dans lequel l'échangeur thermique ou l'élément chauffant permet d'induire le changement de température à proximité immédiate du point d'inversion inférieur (1.4) et/ou à proximité immédiate du point d'inversion supérieur (1.9) et/ou à proximité immédiate du corps flottant (3.0).

6. Dispositif selon la revendication 4 ou 5, dans lequel l'échangeur thermique comprend un circuit primaire et un circuit secondaire, les deux circuits n'étant pas reliés entre eux par un fluide.

7. Dispositif selon la revendication 6, dans lequel un capteur solaire et/ou un processus produisant de la chaleur résiduelle est relié de manière fonctionnelle au circuit primaire de telle sorte que la température d'un troisième fluide peut être modifiée.
